# EUROPÄISCHE PATENTANMELDUNG

(11) **EP 4 253 805 A1**
(43) Veröffentlichungstag der Anmeldung: **04.10.2023**
(21) Anmeldenummer: 22166296.8
(22) Anmeldetag: 01.04.2022
(51) Int. Cl.: F16H 57/08, F16H 57/04, F16H 57/027

(54) **PLANETENGETRIEBEVORRICHTUNG MIT ÖLZUFÜHRUNGSDÜSEN UND EXZENTRISCH INNERHALB VON PLANETENRÄDERN ANGEORDNETEN ÖLZUFÜHRKANÄLEN SOWIE ENTSPRECHENDES INDUSTRIEGETRIEBE UND ENTSPRECHENDE VERWENDUNG UND ENTSPRECHENDES VERFAHREN**

(71) Anmelder: Flender Industriegetriebe GmbH, 09322 Penig (DE)
(72) Erfinder: BRUNS, Christoph, 09322 Penig (DE); KLEIN-HITPASS, Michael, 09322 Penig (DE); TEGELKAMP, Michael, 09322 Penig (DE); SCHLEGEL, Eugen, 09322 Penig (DE)
(74) Vertreter: Michalski Hüttermann & Partner Patentanwälte mbB

(57) **Zusammenfassung**

Die Erfindung betrifft eine Planetengetriebevorrichtung (10) insbesondere für Industriegetriebe beispielsweise bei vertikaler Ausrichtung des Triebstrangs, wobei die Planetengetriebevorrichtung aufweist: einen Planetenträger mit daran gekoppelten Planetenrädern sowie ein in einem Getriebegehäuse abgestütztes Planetenhohlrad; wobei im/am Getriebegehäuse wenigstens eine Düse für die Zuführung von Ölmedium vorgesehen ist, wobei in den Planetenrädern jeweils wenigstens ein exzentrisch angeordneter und axial verlaufender Zuführkanal für Ölmedium vorgesehen ist, insbesondere mit der wenigstens einen Düse in ölkommunikativer Relation/Anordnung zum Zuführkanal oder zu einem entsprechenden Umlaufdurchmesser der Zuführkanäle. Dies begünstigt nicht zuletzt auch eine hohe Effizienz im Zusammenhang mit dem Management von Ölmedium.

## Beschreibung

### TECHNISCHES GEBIET

Die Erfindung betrifft eine Planetengetriebevorrichtung insbesondere für Industriegetriebe, wobei die Planetengetriebevorrichtung aufweist: einen Planetenträger mit daran gekoppelten Planetenrädern sowie ein in einem Getriebegehäuse abgestütztes Planetenhohlrad; wobei im/am Getriebegehäuse wenigstens eine Düse für die Zuführung von Ölmedium vorgesehen ist, wobei in den Planetenrädern jeweils wenigstens ein exzentrisch angeordneter und axial verlaufender Zuführkanal für Ölmedium vorgesehen ist, insbesondere mit der wenigstens einen Düse in ölkommunikativer Relation/Anordnung zum Zuführkanal oder zu einem entsprechenden Umlaufdurchmesser der Zuführkanäle. Die Erfindung betrifft auch ein entsprechendes Industriegetriebe und entsprechende Verwendungen z.B. für Vertikalmühlen oder Windenergieanlagen sowie ein entsprechendes Ölversorgungs- /zuführungsverfahren.

### HINTERGRUND DER ERFINDUNG

Bei der Entwicklung und Konstruktion von Getrieben ist unter anderem auch zu beachten, dass die im Betrieb durch Verlustleistung auftretende Wärme ausreichend effektiv aus dem Getriebe abgeführt wird. Des Weiteren bedürfen viele Getriebekomponenten einer Schmierung, insbesondere um die Reibungsverluste gering zu halten und die Verschleißrate insbesondere in Lagern und an Verzahnungen gering halten zu können. Insbesondere im Zusammenhang mit diesen beiden Funktionen erfüllt das Getriebeöl eine sehr wichtige Rolle. Dabei ist es bei vielen Getriebekonstruktion eine sehr große Herausforderung, alle relevanten Stellen bzw. Bauteile mit möglichst frischem und kühlem Öl zu versorgen, insbesondere wenn das Getriebe dabei nicht vollständig mit Öl befüllt werden soll, was insbesondere auch für die vertikale Einbausituation gilt (axiale Richtung des Triebstrangs zumindest annähernd vertikal ausgerichtet).

Bisher werden in vielen (Planeten-)Getrieben Ölübergabestellen zwischen stationären und rotierenden Bauteilen vorgesehen, insbesondere um das Öl unter einem bestimmten Druck der jeweiligen intendierten Stelle zuführen zu können, beispielsweise zu Schmiermittel erfordernden rotierenden Komponenten. Diese Ölübergabestellen sind jedoch hinsichtlich Konstruktionsweise und Fertigung vergleichsweise komplex und daher auch entsprechend aufwändig in der Konzipierung und Realisierung; auch sind die aufgrund des bei Ölübergabestellen üblicherweise erforderlichen Kontaktes zwischen rotierenden und stationären Bauteilen auftretenden Reibungsverluste und der damit einher gehende erhöhte Verschleiß als nachteilig anzusehen.

In den folgenden Veröffentlichungen werden unterschiedliche Lösungsvorschläge insbesondere basierend auf Übergabestellen beschrieben: CN 105705836 A und DE 10 2010 043 816 A1 und DE 10 2010 043 817 A1 und AU 2009200021 A1 beschreiben eine Schmierung der Planetenlager über Übergabestellen und Schmierbohrungen koaxial zur Sonne und/oder über Bohrungen in der Planetenachse und/oder über Zwischenkammern. DE 10 2010 031 161 A1 beschreibt eine Schmierung der Lager des Planetenträgers über Übergabestellen und Schmierbohrungen. DE 10 2019 214 380 A1 beschreibt allgemein ein Dichtungskonzept für eine Ausgangswelle. DE 10 2016 012 501 A1 beschreibt allgemein ein Getriebegehäuse und eine Abdichtung mittels Wellendichtringen.

Auch ausgehend von diesem Stand der Technik besteht ein Interesse an einer noch vorteilhafteren Realisierbarkeit des von Öl-/Schmiermitteln in (Planeten-)Getrieben sichergestellten Funktionsumfangs. Dabei soll insbesondere auch ein möglichst einfaches und technisch leicht realisierbares Konstruktionskonzept im Vordergrund stehen.

### ZUSAMMENFASSUNG DER ERFINDUNG

Es ist die Aufgabe der vorliegenden Erfindung, Maßnahmen aufzuzeigen, die eine effektive Realisierung des von Öl-/Schmiermitteln in Planetengetrieben sichergestellten Funktionsumfangs auf einfache Weise ermöglichen, insbesondere auch möglichst variabel für unterschiedliche Arten von Planetengetrieben bzw. Planetengetriebekonstruktionen.

Die Lösung der Aufgabe erfolgt durch eine Planetengetriebevorrichtung mit den Merkmalen des Anspruchs 1, durch ein Industriegetriebe mit den Merkmalen des nebengeordneten Vorrichtungsanspruchs sowie durch Verwendungen gemäß Merkmalen des nebengeordneten Verwendungsanspruchs und durch ein Verfahren mit den Merkmalen des nebengeordneten Verfahrensanspruchs. Bevorzugte Ausgestaltungen sind in den Unteransprüchen und in der nachfolgenden Beschreibung angegeben, die jeweils einzeln oder in Kombination miteinander einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft demnach die Bereitstellung von Ölmedium am/im Getriebe sowie das (Zu-)Führen von Ölmedium zu einzelnen Getriebekomponenten.

Bereitgestellt wird insofern eine Planetengetriebevorrichtung insbesondere für Industriegetriebe, beispielsweise in vertikaler Ausrichtung des Triebstrangs, wobei die Planetengetriebevorrichtung aufweist: einen Planetenträger mit daran gekoppelten Planetenrädern sowie ein in einem Getriebegehäuse abgestütztes Planetenhohlrad; wobei im/am Getriebegehäuse wenigstens eine Düse für die Zuführung von Ölmedium vorgesehen ist, insbesondere auch in ölkommunikativer Relation/Anordnung zu einer Stirnseite des Planetenträgers, wobei in den Planetenrädern jeweils wenigstens ein exzentrisch angeordneter und axial (bevorzugt exakt axial, also orthogonal zur radialen Richtung) verlaufender Zuführkanal für Ölmedium vorgesehen ist, insbesondere mit der wenigstens einen Düse in ölkommunikativer Relation/Anordnung zum Zuführkanal oder zu einem entsprechenden Umlaufdurchmesser der Zuführkanäle. Erfindungsgemäß wird insofern vorgeschlagen, das Ölmedium ohne vordefinierte punktuelle kontaktgebundene Übergabestelle zumindest für die Planetenräder und wahlweise auch für weitere Getriebekomponenten bereitzustellen, insbesondere auch für die Lager von (Sonnen-)Welle und Planetenträger. Dies liefert nicht zuletzt auch eine große Variabilität und Flexibilität und einfache Skalierbarkeit in Hinblick auf konstruktive und/oder größen- oder leistungstechnische Anpassungen. Insofern basiert die Erfindung auch auf dem Konzept, das Ölmedium durch Versprühen an wenigstens einem Punkt (Düse) für wenigstens einen vordefinierbaren Bereich kontaktlos bereitzustellen, insbesondere mit axialer Versprührichtung und wahlweise auch mit axial-radialer Versprührichtung oder auch rein radialer Versprührichtung.

Insbesondere auch bei Kombination der hier beschriebenen Maßnahmen kann im Rahmen einer sehr einfachen, kompakten Umsetzung ohne Ölübergabestellen und ohne vordefinierten Vordruck bezüglich solcher Ölübergabestellen sichergestellt werden, dass Öl(-medium) in ausreichender Menge kontaktlos (also ohne körperliche Übertragungsmittel) an die gewünschten/erforderlichen Stellen im Getriebe gefördert wird bzw. dorthin gesprüht wird bzw. dort bereitgestellt ist/wird. Beispielsweise beträgt der (jeweilige) kontaktlose Sprühbereich in axialer Richtung eine Länge gemäß der axialen Erstreckung der zu besprühenden Lager, und/oder beispielsweise beträgt der (jeweilige) kontaktlose Sprühbereich in radialer Richtung eine Länge gemäß dem halben Durchmesser der Planentenräder.

Die Reichweite der Verteilung von Ölmedium ausgehend von den Punkten/Auslässen der Düsen kann insbesondere in Abhängigkeit von einem Vordruck und auch von der Ausgestaltung der Düse vordefiniert werden und beispielsweise bis zu 300mm betragen.

Insbesondere auch bei Kombination der hier beschriebenen sowohl in konstruktiver als auch in fertigungstechnischer Hinsicht auf vergleichsweise einfache Art und Weise realisierbaren Maßnahmen kann eine hocheffiziente Art und Weise der Schmierung erreicht werden. Im Gegensatz zu den bisher im Stand der Technik verfügbaren Konstruktionsweisen sind die erfindungsgemäß vorgeschlagenen Maßnahmen vergleichsweise kostengünstig und einfach umsetzbar. Insbesondere ergeben sich auch dadurch Vorteile im Betriebsverhalten, dass die erfindungsgemäß vorgeschlagenen Maßnahmen ohne berührende Dichtungselemente implementiert werden können, also kontaktlos insbesondere durch Versprühen; dadurch können auch zusätzlichen Reibungsverluste vermieden werden. Insbesondere sind zwischen bewegten Teilen keine Elastomer-Komponenten notwendig, welche üblicherweise einer hohen Verschleißrate unterliegen und bisher häufig ausgetauscht werden müssen. Durch den freien Ölfluss im Getriebe können zudem auch kostenaufwendige, schräg verlaufende Bohrungen eingespart werden.

Als Düse ist hier insbesondere ein nicht körperlicher angebundener Ölauslass zu verstehen, aus welchem das Ölmedium unter vordefinierbaren Auslassparametern abgegeben werden kann, insbesondere in die Gasphase versprüht werden kann, insbesondere bei vordefinierbarer Menge, Richtung und/oder Abgabedruck. Die hier allgemein als Düsen bezeichneten Düsen können auch als Ölzuführungsdüsen oder Ölsprühdüsen oder Blendenbohrungen eingerichtet für kontaktloses Zuführen von Ölmedium beschrieben werden, insbesondere mit der jeweiligen Düse in ölkommunikativer (insbesondere sprühtechnischer) Relation/Anordnung mit wenigstens einer der folgenden Komponenten: Lager der (Sonnen-)Welle, Lager des Planetenträgers, Stirnseite des Planetenträgers (insbesondere Stirnseite des jeweiligen Planetenrades oder der Achse des jeweiligen Planetenrades), Schulter oder radial-axiale Seitenflanke des Planetenträgers, Staublecheinheit.

Als ölkommunikative, insbesondere sprühtechnische Relation ist hier auch eine wirksame Sprühreichweite der jeweiligen Düse zu verstehen.

Personifizierte Begriffe, soweit sie hier nicht im Neutrum formuliert sind, können im Rahmen der vorliegenden Offenbarung alle Geschlechter betreffen. Etwaige hier verwendete englischsprachige Ausdrücke oder Abkürzungen sind jeweils branchenübliche Fachausdrücke und sind dem Fachmann in englischer Sprache geläufig. Etwaige dazu synonym verwendete/verwendbare deutschsprachige Begriffe können hier der Vollständigkeit halber in (Klammern) angegeben werden, oder vice versa.

Bei bisherigen Getrieben waren üblicherweise kontaktgebundene bzw. körperlich vordefinierte Ölübergabestellen zwischen stationären und rotierenden Bauteilen erforderlich bzw. vorgesehen. Hingegen gemäß der Erfindung kann auch die Erkenntnis genutzt werden, dass das Ölmedium auch kontaktlos ohne körperlich vordefinierte Übertragungsmedien oder Übertragungspunkte zugeführt werden kann. Insbesondere wenn ein gegen die Fliehkraft abgeschottetes Ölreservoir, das von wenigstens einer Düse gespeist wird, in strömungstechnischer Verbindung mit den hier beschriebenen exzentrisch angeordneten axialen Zuführkanälen steht, kann die Ölversorgung durch vergleichsweise einfach implementierbare Maßnahmen mit sehr guter Sicherheit realisiert werden, insbesondere auch weitgehend unabhängig von einem etwaigen vorgesehenen oder momentanen/tatsächlichen Ölstand im Getriebegehäuse. Zudem kann die konstruktive Ausgestaltung und auch die Art und Weise der Ölzufuhr dabei sehr kompakt und technisch einfach ausgeführt werden. Dazu kann auch angemerkt werden, dass erfindungsgemäß gar kein vordefiniertes Ölstandsniveau erforderlich ist oder vorgehalten werden muss; vielmehr kann gemäß einem Durchlaufprinzip vorgesehen sein, dass zugeführtes Ölmedium ohne nennenswerte Verweilzeit auch wieder aus dem Gehäuse ausgeleitet werden kann, wodurch nicht zuletzt auch ein vorteilhafter Kühleffekt sichergestellt werden kann (sofern gewünscht/erforderlich).

Sofern gemäß der vorliegenden Offenbarung bezüglich des Planetengetriebes oder Industriegetriebes auf eine vertikale Richtung oder vertikale Einbaulage abgestellt wird, so bezieht sich dies auf die bestimmungsgemäße Einbaulage, bei welcher die Mittellinien bzw. die Drehachse der jeweiligen Getriebekomponente und der Leistungswelle (hier auch jeweils als axiale Richtung bezeichnet) in vertikaler Richtung, also entlang der Schwerkraftrichtung, ausgerichtet sind.

Sofern gemäß der vorliegenden Offenbarung von einer Planetengetriebevorrichtung gesprochen wird, kann sich die entsprechende Offenbarung auch auf eine einzelne oder eine von mehreren Planetengetriebestufen eines Industriegetriebes beziehen.

Vorzugsweise ist durch eine jeweilige Düse wenigstens eine Abgabe-/Sprührichtung definiert; wahlweise kann das Ölmedium an einem entsprechenden Abgabe-/Sprühpunkt auch in mehrere Richtungen abgegeben werden, beispielsweise indem dort mehrere Düsen vorgesehen sind. Insbesondere ist eine in einer bestimmten Radial- oder Umfangsposition angeordnete Düse steuerungs-/regelungstechnisch mit einer Ölversorgung verbunden (bzw. mit einer die Ölversorgung regelnden Steuerungseinheit), insbesondere derart, dass die Betriebscharakteristik einer jeweiligen Düse oder der jeweiligen in den vordefinierten entsprechenden (Radial-)Positionen angeordneten Düsen individuell einstellbar ist, beispielsweise auch in Abhängigkeit von momentanen Betriebsparametern des Planetengetriebes.

Gemäß einem Ausführungsbeispiel ist der jeweils wenigstens eine exzentrisch angeordnete und axial verlaufende Zuführkanal des jeweiligen Planetenrades zumindest bis zu einem mittigen axialen Bereich des Planetenrades, insbesondere bis zur halben axialen Länge des Verzahnungsabschnitts, vorgesehen und dort nach radial außen geführt oder angeschlossen, insbesondere ausschließlich nach radial außen. Dies begünstigt auch einen fluiddynamisch initiierten Ölfluss. Der radiale Anschluss kann beispielsweise in der Art eines radialen Auslasses oder Durchbruchs vorgesehen sein, insbesondere derart, dass der Zuführkanal im Wesentlichen axial verläuft und nur an der vorgesehenen Abgabestelle wenigstens ein radialer Auslass vorgesehen ist. Je nach Ausgestaltung des Lagers kann es auch zweckdienlich sein, mehrere radiale Auslässe vorzusehen. Dies kann insbesondere auch in Abhängigkeit von Betriebsbedingungen wie z.B. Drehzahl, Viskosität und dergleichen im jeweiligen Anwendungsfall individuell vom mit der vorliegend beschriebenen Planetengetriebevorrichtung näher befassten Fachmann vorgegeben werden.

Gemäß einem Ausführungsbeispiel weist der jeweilige exzentrisch angeordnete axiale Zuführkanal ausschließlich streng axial und/oder streng radial aufweisende Abschnitte auf, wobei ein (etwaiger) radial ausgerichteter Abschnitt bevorzugt lediglich als eine Art radial ausgerichteter Auslass ausgestaltet ist, z.B. in der Art einer sehr kurzen radial (insbesondere orthogonal zum axialen Abschnitt) auslaufenden Bohrung. Dies ermöglicht bzw. erleichtert auch eine vorteilhafte Nutzung strömungsmechanischer Effekte und kann eine örtlich und/oder hinsichtlich der Menge möglichst gezielte Ölabgabe erleichtern.

Gemäß einem Ausführungsbeispiel mündet der jeweilige exzentrisch angeordnete axiale Zuführkanal an einem Lager des jeweiligen Planetenrades, insbesondere zwischen zwei axial aneinander grenzenden Lagerabschnitten. Dies ermöglicht nicht zuletzt auch eine effektive Verteilung des Ölmediums ausgehend von einer vergleichsweise geringen Anzahl von Ölauslässen. Dabei handelt es sich bei den Auslasspunkten nicht um zusätzlich geschaffene Ölübergabestellen, sondern um eine Schnittstelle, an welcher eine ohnehin aufgrund der Lager bedingte Relativbewegung stattfindet, welche für die Bereitstellung und Verteilung des Ölmediums gemäß der vorliegenden Offenbarung vorteilhaft genutzt werden kann.

Gemäß einem Ausführungsbeispiel ist das jeweilige Planetenrad um eine Planetenachse gelagert, welche verdrehfest am Planetenträger gelagert ist, insbesondere mittels einer Verdrehsicherung, wobei der exzentrisch angeordnete axiale Zuführkanal in der jeweiligen Planetenachse vorgesehen ist. Dies begünstigt nicht zuletzt auch eine vorteilhafte relative und absolute Anordnung des exzentrischen Zuführkanals und erleichtert die Vorgabe vordefinierter Strömungsverhältnisse insbesondere auch in Abhängigkeit von Fliehkräften.

Gemäß einem Ausführungsbeispiel sind die Planetenräder derart drehbar um eine/die jeweilige Planetenachse gelagert, dass die jeweilige Planetenachse in vordefinierter Umfangs-/Ausrichtposition ausgerichtet bleibt, insbesondere mit dem jeweiligen exzentrisch angeordneten und axial verlaufenden Zuführkanal in vordefinierter exzentrischer maximal radial außen liegender Radialposition bezüglich des Momentanpols (Mittelpunkt der Drehbewegung des Planetenträgers). Dies begünstigt auch das Einstellen dauerhaft gleichbleibender Betriebsbedingungen und erleichtert demnach auch das Vordefinieren bestimmter Ölflussbedingungen.

Gemäß einem Ausführungsbeispiel ist wenigstens eine Düse in einen Bereich stirnseitig der jeweiligen Planetenradachse oder stirnseitig zu einem Umlaufdurchmesser der Planetenradachsen geführt oder dorthin ausgerichtet. Dies erleichtert nicht zuletzt auch eine Weiterleitung bzw. Abgabe des Öls an die exzentrischen axialen Zuführkanäle.

Gemäß einem Ausführungsbeispiel weist die Planetengetriebevorrichtung eine Mehrzahl von über den (Innen-)Umfang des Getriebegehäuses in radialer Richtung und/oder in Umfangsrichtung verteilt angeordneten Düsen zum Bereitstellen von Ölmedium auf. Die Anzahl und die relative Anordnung der Düsen kann je nach konstruktiver Ausgestaltung des Getriebes und der einzelnen Getriebekomponenten und eines etwaigen gewünschten Ölstandes (Füllstand Ölmedium) vom Fachmann individuell optimiert werden. Eine Gleichverteilung über den Umfang, insbesondere bezüglich eines bestimmten Anordnungs-Durchmessers, liefert auch möglichst exakte Bedingungen zu jeder Winkel-/Umlaufposition der einzelnen Getriebekomponenten.

Gemäß einem Ausführungsbeispiel ist wenigstens eine (weitere) Düse in einen Bereich stirnseitig eines Lagers des Planetenträgers und/oder stirnseitig eines Lagers einer innerhalb des Planetenträgers geführten (Sonnen-)Welle geführt oder dorthin ausgerichtet. Dies ermöglicht auch das Abgeben von Ölmedium an mehreren vorteilhaften Stellen, wobei wahlweise auch jeweils düsenspezifisch individuelle Parameter einstellbar sind (beispielsweise Durchfluss, Druck, oder dergleichen).

Gemäß einem Ausführungsbeispiel ist der Planetenträger einlassseitig, also auf einem Strömungspfadabschnitt des Ölmediums, welcher bildlich gesprochen einer/der Druckseite entspricht, ohne Zuführkanäle ausgeführt. Anders ausgedrückt: Die Zuführung des Ölmediums insbesondere bis zu den Lagern der Planetenräder erfolgt bevorzugt ausschließlich über die Zuführkanäle in den Planetenradachsen. Diese Anordnung ermöglicht bzw. erleichtert auch die Realisierung eines vorteilhaften fluiddynamischen Effekts in der Art einer Saugseite insbesondere dank hoher Fliehkräfte.

Gemäß einem Ausführungsbeispiel erfolgt die Ölzuführung auf einem durch wenigstens einen Zuführkanal definierten Ölströmungspfad, welcher zumindest auf der Druckseite nicht durch den Planetenträger verläuft oder welcher auf der Druckseite vor dem Planetenträger endet. Dies ermöglicht auch, eine treibende Kraft auf der Auslassseite bzw. Saugseite über einen großen Radius im Planetenträger aufzubauen.

Als Druckseite ist hier insbesondere derjenige Abschnitt des kanalgebundenen Ölströmungspfades zu verstehen, in welchem Schwerkräfte und/oder Zentrifugalkräfte in bestimmungsgemäßer Ölversorgungsrichtung fluiddynamisch wirken, insbesondere ohne aktiv aufgebaute technische Drucksäule, also ohne technischen systemseitigen Vordruck.

Gemäß einem Ausführungsbeispiel ist stirnseitig der Planetenräder eine Staublecheinheit vorgesehen, insbesondere in radialer Überlappung des jeweiligen exzentrischen Zuführkanals, insbesondere in radial nach innen offener Anordnung (und in radial nach außen geschlossener bzw. abschließender/abdichtender Anordnung), insbesondere in einer am Planetenträger befestigten Anordnung. Hierdurch kann auch eine Art Reservoir gebildet werden, aus welchem das Ölmedium dann auf dem durch die exzentrischen axialen Zuführkanäle definierten Ölflusspfad entnommen und weitergeführt werden kann, insbesondere auch basierend auf einer Saugwirkung ausgehend von radial ausgerichteten Ausleitkanälen im Planetenträger. Beispielsweise bildet die Staublecheinheit mit der Planetenträgerstirnseite eine Tasche oder Kavität zum radialen Zurückhalten von Ölmedium entgegen wirkender Zentrifugalkräfte. Bevorzugt ist die Staublecheinheit als flacher Ring ausgestaltet, also vollumfänglich ausgebildet/vorgesehen. Bevorzugt ist das durch die Staublecheinheit gebildete Reservoir bzw. die entsprechende Kavität zur Aufnahme von Ölmedium vollumfänglich ausgebildet/vorgesehen.

Gemäß einem Ausführungsbeispiel ist eine/die in ölkommunikativer Relation zu den exzentrischen Zuführkanälen stehende Staublecheinheit der Planetengetriebevorrichtung bei bestimmungsgemäßem Betrieb derart angeordnet, dass ein gegen die Fliehkraft abgeschottetes Ölreservoir gebildet wird, welches von wenigstens einer Düse gespeist wird, insbesondere bei vertikaler Ausrichtung der axialen Richtung des Triebstrangs bzw. der Mittenlängsachse des Triebstrangs. Dies begünstigt nicht zuletzt auch eine robuste und einfache Art und Weise der Verteilung des Ölmediums, insbesondere mit Pufferfunktion, also zumindest teilweise entkoppelt von einer (momentanen) Funktionsweise der Düsen. Anders ausgedrückt: Eine/die in ölkommunikativer Relation zu den exzentrischen Zuführkanälen stehende Staublecheinheit kann ein bei bestimmungsgemäßem Betrieb gegen die Fliehkraft abgeschottetes Ölreservoir umgrenzen, wobei die Zuführkanäle über das Ölreservoir gespeist werden können, insbesondere auch bei guter Systemsicherheit.

Gemäß einem Ausführungsbeispiel ist die Mittenlängsachse der Planetengetriebevorrichtung wahlweise horizontal oder vertikal ausgerichtet. Die erfindungsgemäße Art und Weise der Ölzuführung und -verteilung kann weitgehend unabhängig von der axialen Ausrichtung des Getriebes realisiert sein/werden. Wahlweise ist eine/die in ölkommunikativer Relation zu den exzentrischen Zuführkanälen stehende Staublecheinheit der Planetengetriebevorrichtung bei bestimmungsgemäßem Betrieb deutlich oberhalb eines gegebenenfalls gewünschten oder sich momentan im Gehäuse einstellenden Ölstandes angeordnet. Optional kann ein/der tatsächliche/r Ölstand sehr niedrig, insbesondere da die exzentrischen Zuführkanäle auch unmittelbar über die Düsen gespeist werden können, insbesondere in Verbindung mit einem umlaufend und stirnseitig am Planetenträger geschaffenen Ölreservoir. Insofern ist es nicht erforderlich, einen bestimmten Ölstand im Getriebe sicherzustellen; diesbezüglich kann demnach auch eine potentielle Risiko-/Fehlerquelle ausgeschlossen werden. Auch bei horizontaler Ausrichtung des Triebstrangs bzw. der Mittenlängsachse des Getriebes kann mittels der Staublecheinheit ein Ölreservoir für die Planetenlager bereitgehalten werden, insbesondere unter Nutzung von Zentrifugalkräften.

Gemäß einem Ausführungsbeispiel weist die Planetengetriebevorrichtung wenigstens einen radial verlaufenden Auslasskanal zur Entlüftung auf, insbesondere in einer Anordnung auf axialer Höhe des jeweiligen Endes der Planetenradachsen. Dies begünstigt nicht zuletzt auch ein autonomes Einstellen vorteilhafter Bedingungen für einen fluiddynamisch eigeninduzierten Ölfluss.

Gemäß einem Ausführungsbeispiel weist die Planetengetriebevorrichtung wenigstens einen radial verlaufenden Auslasskanal zum Ölablauf auf, insbesondere auf einem Ölflusspfad in einem Abschnitt des Planetenträgers in welchem das Ölmedium die Lager der Planetenräder bereits passiert hat, insbesondere in einer Anordnung in ölkommunikativer Relation mit einem/dem radial verlaufenden Auslasskanal zur Entlüftung, insbesondere axial weiter außen liegend als der Entlüftungs-Auslasskanal. Dies begünstigt auch einen Ölfluss, welcher im Wesentlichen oder ausschließlich durch das Ölmedium als solches (ohne technisch aufrechterhaltener Drucksäule) und basierend auf fluiddynamischen Effekten bewirkt wird, so dass das Management des Ölmediumhaushalts im Wesentlichen auch durch ein Einstellen und wahlweise auch aktives Regeln des Betriebs bzw. der Parameter der wenigstens einen Düse erfolgen kann.

Gemäß einem Ausführungsbeispiel ist das Ölmedium in einem mit den Planetenrädern überlappenden Axialabschnitt mittels der Kanäle im Wesentlichen ausschließlich axial geführt (d.h., ausschließlich axial abgesehen von einem ausgehend vom exzentrischen Zuführkanal abgehenden und zum jeweiligen Planetenradlager nach radial außen geführten Radialabschnitt) und/oder das Ölmedium ist in einem mit dem Planetenträger auslassseitig überlappenden Axialabschnitt mittels der Kanäle ausschließlich radial geführt. Dies begünstigt nicht zuletzt auch einen durch das Ölmedium selbst induzierten Ölfluss ohne das Erfordernis einer Öldrucksäule; vielmehr kann der Transport entlang der intendierten Ölflusspfade basierend auf strömungsmechanischen bzw. fluiddynamischen Effekten erfolgen, insbesondere unterstützt durch Fliehkräfte in radial außenliegenden Ausleitpunkten, wobei die Ölzuführung wahlweise ausschließlich mittels der Düse(n) erfolgt/erfolgen kann.

Gemäß einem Ausführungsbeispiel weist die Planetengetriebevorrichtung ausschließlich streng axial und/oder streng radial verlaufende Zuführkanäle oder Auslasskanäle jeweils für das Ölmedium auf. Dies erleichtert auch die fertigungstechnische Umsetzung, insbesondere auch bei großem Kostendruck.

Gemäß einem Ausführungsbeispiel ist ein/der durch die Planetengetriebevorrichtung vordefinierte Ölströmungspfad zumindest wie folgt definiert/vorgegeben: Auslass der Düse, Einlass zum jeweiligen exzentrisch angeordneten und axial verlaufender Zuführkanal bis hin zum/zu einem Lager des entsprechenden Planetenrades, Entlüftungs- und/oder Ablaufkanal (bzw. Ausleitkanal) insbesondere beginnend im Bereich des stirnseitigen Endes einer/der (Sonnen-)Welle, wobei der Entlüftungs- und/oder Ablaufkanal bevorzugt in ausschließlich radialer Ausrichtung vorgesehen ist/sind. Dies begünstigt nicht zuletzt ein vorteilhaftes Zusammenspiel der für den Ölfluss beteiligten Komponenten sowohl auf der Ölzuführungsseite als auch auf der Ölableitungsseite.

Ein Aspekt der Erfindung betrifft ferner auch ein Industriegetriebe, beispielsweise für einen Triebstrang einer Vertikalmühle oder einer Windenergieanlage, wobei eine Ölversorgung innerhalb des Getriebes ausgehend von den hier beschriebenen Düsen und unter anderem über die hier beschriebenen exzentrischen axialen Zuführkanäle sichergestellt werden kann. Die zuvor genannte Aufgabe wird insofern auch gelöst durch ein Industriegetriebe, beispielsweise zum Antrieb einer Vertikalmühle, mit einer zuvor weiter oben beschriebenen Planetengetriebevorrichtung.

Ein Aspekt der Erfindung betrifft ferner auch ein möglichst vorteilhaftes Management des Ölmediums basierend auf der Zuführung/Einleitung des Ölmediums mittels Düsen in das Getriebegehäuse. Die zuvor genannte Aufgabe wird demnach auch gelöst durch Verwendung einer Planetengetriebevorrichtung in einem Industriegetriebe, insbesondere einer zuvor weiter oben beschriebenen Planetengetriebevorrichtung, insbesondere in vertikaler Einbaulage (vertikale Ausrichtung des Triebstrangs), wobei eine Ölmediumversorgung über wenigstens eine im/am Getriebegehäuse vorgesehene Düse für die Zuführung von Ölmedium bereitgestellt wird, welche Düse bevorzugt in ölkommunikativer Relation/Anordnung zu einer Stirnseite des Planetenträgers der Planetengetriebevorrichtung (oder wenigstens einer Planetengetriebestufe der Planetengetriebevorrichtung) angeordnet ist, und wobei das Ölmedium derart geführt ist/wird, dass das Ölmedium basierend auf der Relativbewegung der Getriebekomponenten, insbesondere auch schwerkraft- und/oder zentrifugalkraftgetrieben, über in Planetenachsen der Planetenräder der Planetengetriebevorrichtung jeweils vorgesehenen exzentrisch angeordneten und axial verlaufenden Zuführkanälen unabhängig vom Planetenträger zum jeweiligen Lager des jeweiligen Planetenrades geführt und von dort abgeleitet wird, insbesondere über ausschließlich axial oder radial verlaufende Kanalabschnitte. Hierdurch lassen sich zuvor genannte Vorteile realisieren, insbesondere auch in Hinblick auf ein vorteilhaftes Management des Ölmediums und einen freier wählbaren/definierbaren Ölstand im Getriebe (oder sogar komplett entbehrlichen Ölstand). Beispielsweise kann erfindungsgemäß auch eine Verwendung in einem Triebstrang einer Windenergieanlage erfolgen.

Ein Aspekt der Erfindung betrifft ferner auch die Art und Weise des Bereitstellens des Ölmediums im Getriebe und an den einzelnen Getriebekomponenten, sowie die Art und Weise des Ausleitens von Getriebeöl aus den einzelnen Getriebekomponenten oder aus dem Getriebe. Die zuvor genannte Aufgabe wird insofern auch gelöst durch ein Verfahren gemäß dem entsprechenden nebengeordneten Verfahrensanspruch, nämlich durch ein Verfahren zum Bereitstellen von Ölmedium in einer Planetengetriebevorrichtung, insbesondere in einer zuvor weiter oben beschriebenen Planetengetriebevorrichtung, insbesondere in einem Industriegetriebe, wobei das Ölmedium über wenigstens eine im/am Getriebegehäuse der Planetengetriebevorrichtung vorgesehene Düse zugeführt (insbesondere versprüht) und eingespeist wird (insbesondere kontaktlos ohne körperliche feste

Übertragungskörper), wobei das Ölmedium zumindest in einem mit den Planetenrädern der Planetengetriebevorrichtung überlappenden Axialabschnitt derart mittels exzentrisch in Planetenachsen der Planetenräder angeordneten und axial darin verlaufenden Zuführkanälen zu einem jeweiligen Lager der Planetenräder geführt ist/wird, dass das Ölmedium basierend auf der Relativbewegung der Getriebekomponenten zum jeweiligen Lager des jeweiligen Planetenrades geführt und von dort abgeleitet wird, insbesondere über im Wesentlichen ausschließlich axial verlaufende Kanalabschnitte zu den Lagern des jeweiligen Planetenrades geführt über ausschließlich radial verlaufende Kanalabschnitte aus dem Planetenträger abgeleitet wird, insbesondere indem der Ölfluss im Wesentlichen durch Einstellen und wahlweise auch aktives Regeln des Betriebs bzw. der Parameter der wenigstens einen Düse erfolgt (also ohne zusätzliche technische Drucksäule und ohne Druckaufbau an irgendwelchen körperlich vordefinierten Ölübergabestellen). Hierdurch ergeben sich zuvor genannte Vorteile, insbesondere auch in Hinblick auf eine besonders nachhaltige Betriebsweise und ein besonders einfaches und auch effizientes/effektives Management des Ölmediums.

Zusammenfassung: Die Erfindung betrifft eine Planetengetriebevorrichtung insbesondere für Industriegetriebe beispielsweise bei vertikaler Ausrichtung des Triebstrangs, wobei die Planetengetriebevorrichtung aufweist: einen Planetenträger mit daran gekoppelten Planetenrädern sowie ein in einem Getriebegehäuse abgestütztes Planetenhohlrad; wobei im/am Getriebegehäuse wenigstens eine Düse für die Zuführung von Ölmedium vorgesehen ist, wobei in den Planetenrädern jeweils wenigstens ein exzentrisch angeordneter und axial verlaufender Zuführkanal für Ölmedium vorgesehen ist, insbesondere mit der wenigstens einen Düse in ölkommunikativer Relation/Anordnung zum Zuführkanal oder zu einem entsprechenden Umlaufdurchmesser der Zuführkanäle. Dies begünstigt nicht zuletzt auch eine hohe Effizienz im Zusammenhang mit dem Management von Ölmedium.

### KURZE BESCHREIBUNG DER FIGUREN

In den nachfolgenden Zeichnungsfiguren wird die Erfindung noch näher anhand bevorzugter Ausführungsbeispiele exemplarisch beschrieben, wobei die nachfolgend dargestellten Merkmale sowohl jeweils einzeln als auch in Kombination einen Aspekt der Erfindung darstellen können, und wobei für Bezugszeichen, die nicht explizit in einer jeweiligen Zeichnungsfigur beschrieben werden, auf die anderen Zeichnungsfiguren verwiesen wird. Es zeigen jeweils in schematischer Darstellung:
**Figur 1** in einer geschnittenen Seitenansicht einen Ausschnitt einer Planetengetriebevorrichtung gemäß einem Ausführungsbeispiel im Bereich einer der Stirnseiten des Planetenträgers;
**Figur 2** in einer weiteren geschnittenen Seitenansicht einen weiteren Ausschnitt einer Planetengetriebevorrichtung gemäß einem weiteren Ausführungsbeispiel in einem axial mittigen Bereich des Planetenträgers;
**Figur 3** in einer weiteren geschnittenen Seitenansicht einen weiteren Ausschnitt einer Planetengetriebevorrichtung gemäß einem weiteren Ausführungsbeispiel in einem axial mittigen Bereich des Planetenträgers;
**Figur 4** in einer weiteren geschnittenen Seitenansicht einen weiteren Ausschnitt einer Planetengetriebevorrichtung gemäß einem weiteren Ausführungsbeispiel im Bereich der anderen Stirnseite des Planetenträgers;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird eine Planetengetriebevorrichtung 10 mit einem Getriebegehäuse 10.1 und einem Planetenhohlrad 10.2 mit Innenverzahnung, in welchem mehrere Planeten bzw. Planetenräder 13 umlaufen, die in einem Planetenträger 12 gelagert sind. Die Planeten interagieren mit einer Welle 11 bzw. mit einer/der Sonne (Sonnenrad) der Welle. Die Planeten sind jeweils um eine Planetenachse 13.1 bzw. Planetenachseinheit (z.B. Lagerbolzen) in wenigstens einem Lager 13.5 gelagert, wobei die jeweilige Planetenachse bevorzugt mit einer Verdrehsicherung 13.3 gegen relative Rotation zum Planetenträger gesichert ist.

Innen im Getriebegehäuse, insbesondere an einer Innenfläche des Getriebegehäuses, sind Düsen 14 (insbesondere Sprühdüsen bzw. Zuführungsdüsen) vorgesehen, welche über Schmierbohrungen bzw. Zuführkanäle 10.3 an eine Ölmediumversorgung 15 (insbesondere Versorgungsleitung/Druckleitung bzw. Druckleitungssystem) angeschlossen sind, und mittels welchen eine Weitergabe des Ölmediums an die Lager der Planeten erfolgen kann, insbesondere über exzentrisch angeordnete Zuführkanäle. In den in den Figuren beschriebenen Ausführungsbeispielen sind beispielsweise Düsen in wenigstens vier unterschiedlichen Radialpositionen vorgesehen: wenigstens eine erste insbesondere axial auf ein/das Lager der Sonnenwelle ausgerichtete Düse 14.1, wenigstens eine weitere (zweite) insbesondere axial auf ein/das Lager des Planetenträgers ausgerichtete Düse 14.2, wenigstens eine weitere (dritte) insbesondere axial-radial auf ein/das Lager des Planetenträgers und/oder auf den Umlaufdurchmesser der Planetenachsen und/oder auf eine/die Staublecheinheit bzw. eine dadurch gebildete Kavität ausgerichtete Düse 14.3, und wenigstens eine weitere (vierte) insbesondere axial-radial auf eine Schulter des Planetenträgers bzw. in den lateral außenliegenden Bereich des Planetenträgers in Richtung Planetenhohlrad ausgerichtete Düse 14.4.

Dank der Düsen sind keine gemäß dem Stand der Technik verbreitet genutzte und körperlich gebundene bzw. Kontakt erfordernde Ölübergabestellen erforderlich. Vielmehr ermöglichen die Düsen 14 einen kontaktlosen Sprühbereich 20 mit vordefinierter (oder je nach Vordruck und Ölversorgung wahlweise auch steuer-/regelbarer beispielsweise für bestimmte Betriebszustände individuell vordefinierbarer) radialer Erstreckung r20 bzw. axialer Erstreckung x20, insbesondere mindestens bis zur Stirnseite der Planeten und/oder der entsprechenden zu versorgenden Lager von Welle und Planetenträger.

Bevorzugt ist stirnseitig am Planetenträger wenigstens eine Staublecheinheit 16 vorgesehen, insbesondere vollumfänglich, insbesondere ringartig. Zusammen mit dem Planetenträger kann die Staublecheinheit 16 ein bei bestimmungsgemäßem Betrieb (also bei umlaufenden Planeten) gegen die Fliehkraft abgeschottetes Ölreservoir umgrenzen. Hierdurch kann die Ölversorgung und Ölausbreitung und Ölweiterleitung innerhalb des Getriebes auch mit hoher Sicherheit vorgehalten bzw. sichergestellt werden, wie im Folgenden näher erläutert. Wahlweise kann die hier beschriebene Funktionalität der Staublecheinheit 16 auch durch eine entsprechende Formgebung des Planetenträgers bereits funktional in den Planetenträger integriert sein, also ohne dass eine Staublecheinheit im Sinne eines separaten Bauteils erforderlich ist.

In den rotierenden Getriebekomponenten sind mehrere Schmierbohrungen bzw. Zuführ- oder Ausleitkanäle 18 vorgesehen, insbesondere umfassend die oben bereits erwähnten exzentrischen Achsbohrungen bzw. Zuführkanäle 18.1 in den Planetenachsen 13.1 (insbesondere in axialparalleler und möglichst weit radial außen, also exzentrisch liegender Anordnung) sowie im Bereich der Auslass- oder Saugseite eine oder mehrere bevorzugt radial verlaufende Entlüftungsbohrungen 18.2 (bzw. Auslasskanäle) und/oder Ablaufbohrungen 18.3 (bzw. Auslasskanäle). Das Ölmedium kann den jeweiligen Kanal insbesondere über einen radial nach außen führenden Radialabschnitt 18.11 oder einen radial außenliegenden Ausleitpunkt P18 verlassen, insbesondere auch unterstützt durch fluiddynamisch wirkende Fliehkräfte.

Im Gehäuse 10.1 ist beispielsweise wenigstens eine unten liegende Spaltdichtung 10.5 vorgesehen bzw. daran ausgestaltet, über welche ein Ablauf bzw. ein Ausleiten von Ölmedium F realisiert werden kann. Insbesondere bei vertikaler Ausrichtung des Triebstrangs (bzw. von dessen Mittenlängsachse M) ist eine vollumfängliche Abdichtung des Gehäuses erforderlich. Dazu können eine oder mehrere (insbesondere jeweils vollumfängliche) Dichtungen 19 vorgesehen sein, insbesondere auch wenigstens eine unten im Ölbad liegende und zumindest teilweise durch eine Gehäusekomponente bereitgestellte Spaltdichtung 10.5. Die hier beschriebenen Dichtungen 19 können wahlweise auch zusätzliche Dichtungselemente umfassen (hier nicht explizit dargestellt/beschrieben).

Insbesondere bei vertikaler Ausrichtung des Getriebes bzw. des Triebstrangs ermöglicht die Erfindung, einen ein Höhenniveau zF des aktiv genutzten Ölmediums von einem tatsächlichen Level/Füllstand des Getriebeöls im Getriebe zu entkoppeln, insbesondere indem das Ölmedium in einem vergleichsweise kleinen und unmittelbar gespeisten Ölreservoir (insbesondere gebildet durch eine/die Staublecheinheit) an einem vergleichsweise hohen Punkt vorgehalten wird. In den hier beschriebenen Ausführungsbeispielen sind die Düsen bevorzugt zumindest teilweise in einem axialen Randbereich des Planetenträgers angeordnet, und an der Stirnseite der Planeten wird ein vergleichsweise weit oben liegendes Ölreservoir gebildet. Hierdurch kann auch weitgehend unabhängig von der Funktionsweise der Düsen (auf passive Weise) eine schwerkraftgetriebene Drucksäule für das Ölmedium bereitgestellt werden, welche (bei vertikaler Ausrichtung des Triebstrangs) zusätzlich zu Fliehkräften einen vorteilhaften Effekt für die Ölzuführung und -verteilung ausübt (autonom, ohne zusätzlichen Pump- oder Steuerungs-/Regelungsaufwand).

In den Figuren werden die folgenden Richtungsangaben vorgenommen: radiale Richtung r (insbesondere horizontal, bei vertikaler Ausrichtung der Mittenlängsachse des Getriebes), axiale Richtung x bzw. axiale Ausrichtung des Getriebes oder Triebstrangs (z.B. vertikal), und Höhenrichtung z (vertikal), beispielsweise entsprechend der axialen Ausrichtung des Triebstrangs. In den dargestellten Ausführungsbeispielen entspricht die axiale Richtung x zumindest annähernd der vertikalen Richtung z.

Im Folgenden werden Besonderheiten der Erfindung unter Bezugnahmen auf einzelne Figuren bzw. Ausführungsbeispiele erläutert.

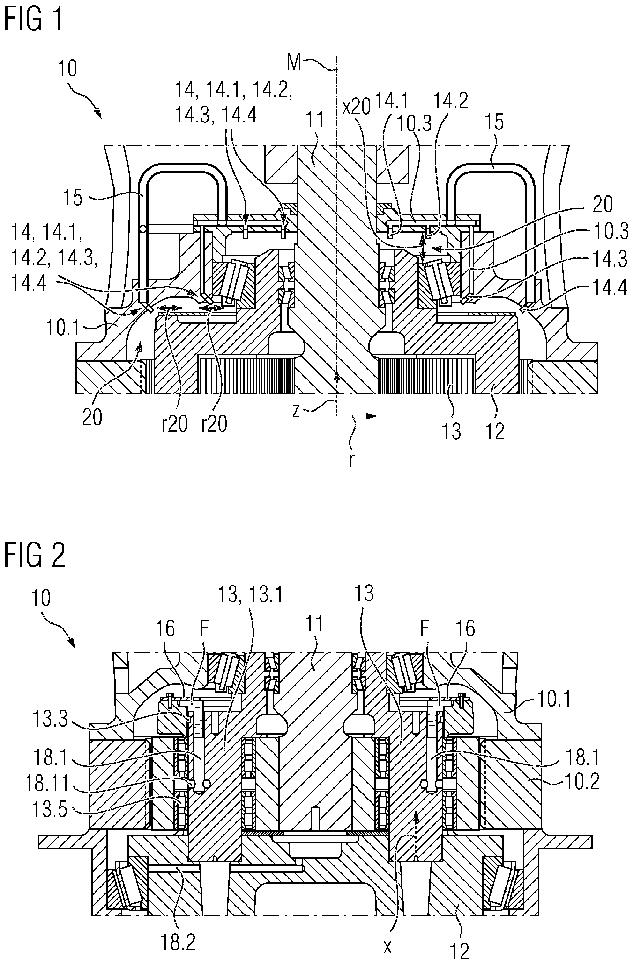

In **Fig. 1** ist ein Ausschnitt einer Planetengetriebevorrichtung 10 im Bereich der (Sonnen-)Welle 11 und des Planetenträgers 12 gezeigt. Vier in unterschiedlichen Radialpositionen angeordnete Düsen sind auf die entsprechende Stirnseite des Planetenträgers gerichtet, auf der jeweiligen Seite der Mittenlängsachse, also insgesamt wenigstens acht Düsen, wobei sich die gezeigte Anordnung in einer weiteren Winkelposition um die Mittenlängsachse auch wiederholen kann (z.B. 16 Düsen). Die jeweilige von innen nach radial außen gezählt erste Düse 14.1 ist auf ein Lager der (Sonnen-)Welle 11 ausgerichtet, und die jeweilige von innen nach radial außen gezählt zweite Düse 14.2 ist auf ein Lager des Planetenträgers 12 ausgerichtet.

Aus Fig. 1 ist auch erkennbar, dass eine vergleichsweise große Anzahl von an unterschiedlichen Radial- und wahlweise auch Umfangspositionen vorgesehener Düsen eine Gleichverteilung des Ölmediums begünstigen kann. Durch das Vorsehen einer im jeweiligen Anwendungsfall individuell optimierbaren (dem Ölbedarf entsprechender) Anzahl von Düsen und/oder deren Größe (optional düsenspezifischer Durchsatz), insbesondere in mehreren Radialpositionen oder auch an mehreren Stellen über den Umfang verteilt (beispielsweise jeweils befestigt an der Gehäuseinnenwand), können die relevanten Bauteile bzw. Getriebekomponenten mit frischem und beispielsweise auch gekühltem Getriebeöl versorgt werden. Dabei kann der Ölflusspfad auch derart vorgegeben sein, dass Ölmedium aus der Mitte durch bei Getrieberotation wirkender Zentrifugalkraft nach radial außen getrieben wird. Bevorzugt wird dafür auch ein Ölreservoir an einer Stirnseite des Planetenträgers bereitgehalten. Beispielsweise erfolgt eine kanalgebundene Ölweiterleitung ausschließlich ausgehend von einem solchen Ölreservoir.

In **Fig. 2** ist ein Ausschnitt einer Planetengetriebevorrichtung 10 im Bereich des Planetenträgers 12 und der Planetenräder 13 gezeigt. Das von den Düsen eingesprühte Ölmedium kann zumindest teilweise in einem durch eine Staublecheinheit 16 stirnseitig am Planetenträger gebildeten Ölreservoir vorgehalten werden, insbesondere auch im Zusammenhang mit Fliehkräften, und von dort den exzentrischen Zuführkanälen 18.1 zugeführt werden.

Aus Fig. 2 ist auch erkennbar, dass das Management des Ölmediums (Ölhaushalt) auch durch wenigstens eine insbesondere/bevorzugt am Planetenträger befestigte, z.B. aufgeschraubte Staublecheinheit optimiert werden kann. Bevorzugt ist die wenigstens eine Staublecheinheit derart relativ zu den benachbarten weiteren Getriebekomponenten integriert, dass verhindert wird, dass Zentrifugalkräfte das Ölmedium von stirnseitigen Flächenabschnitten, insbesondere von der Planetenträger-Oberseite (bzw. -Stirnseite) nach radial außen treiben. Dank einer derart angeordneten Staublecheinheit kann das Ölmedium auch in einer Art Kavität oder einem Reservoir vorgehalten werden, insbesondere zwecks Einleitung in die exzentrischen Zuführkanäle. Ein derartiges Reservoir kann insofern auch dann bereitgestellt werden, wenn der Ölfüllstand im Getriebe auf einer deutlich niedrigeren Höhenposition als die Staublecheinheit liegt. Insofern kann fortwährend ein zurückgehaltenes Ölvolumen an den Achsbohrungen bzw. exzentrischen Zuführkanäle bereitgehalten werden, so dass die Lager auf den Planetenachsen bei guter robuster Systemsicherheit geschmiert werden können.

In Fig. 2 ist ferner grob schematisch Ölmedium F (Öl-Fluid, insbesondere Getriebeöl) dargestellt, das im durch die Staublecheinheit gebildeten Reservoir vorliegt und von dort in die exzentrisch angeordneten axial verlaufenden Kanäle zieht. Das Ölmedium F ist hier zwecks besserer Übersichtlichkeit nur in einem Teilabschnitt der Zuführkanäle dargestellt.

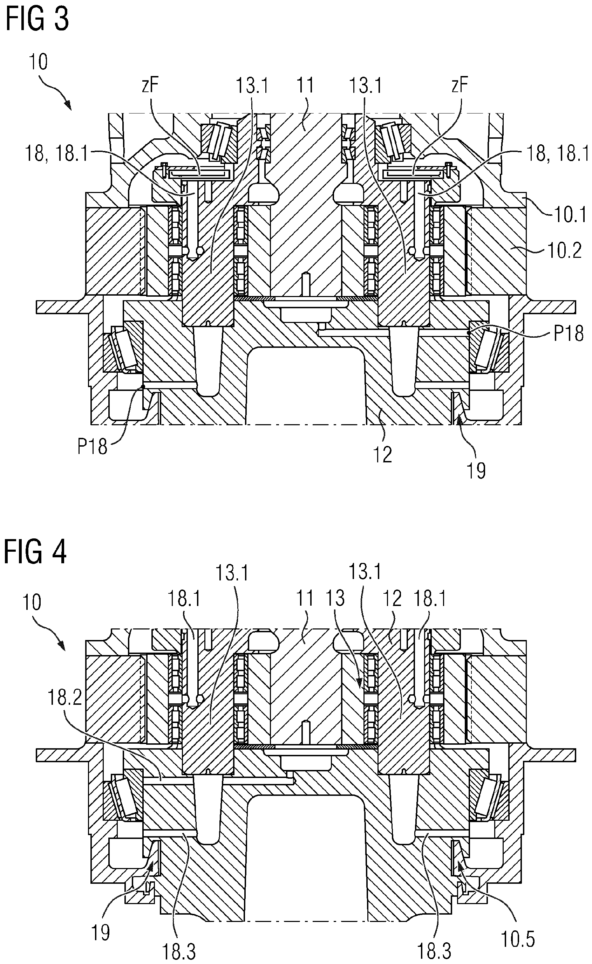

In **Fig. 3** ist ein Ausschnitt einer Planetengetriebevorrichtung 10 im Bereich des Planetenträgers 12 und der Planetenräder 13 bis hin zu einer (bei vertikaler Ausrichtung des Triebstrangs untenliegenden) Gehäuseabdichtung 19 gezeigt. Insofern ist der (in Hinblick auf die axiale Erstreckung) komplette kanalgebundene Ölflusspfad gemäß einem der Ausführungsbeispiele erkennbar, ausgehend vom Ölreservoir bzw. vom dadurch sichergestellten Höhenlevel zF bis hin zu wenigstens einem Ausleitpunkt P18.

Aus Fig. 3 ist auch erkennbar, dass die in der Planetenachse vorgesehenen Schmierbohrungen bzw. Zuführkanäle bevorzugt derart ausgeführt und angeordnet sind, dass die Schmierung der Lager durch die Fliehkraftwirkung unterstützt und das Ölmedium in die Achsbohrungen gedrückt bzw. gesogen wird. Insbesondere kann auch durch eine Verdrehsicherung der Planetenachsen sichergestellt werden, dass die Bohrungen bzw. Kanäle gemäß der Wirkrichtung der Fliehkraft bzw. hinsichtlich gutem Fliehkrafteffekt ausgerichtet sind, insbesondere möglichst weit radial außen. Lediglich ein vergleichsweise kurzer radialer Auslass führt bis zur Außenmantelfläche der jeweiligen Planetenachse; auch insofern kann die mögliche Exzentrizität bevorzugt maximiert werden.

In **Fig. 4** ist ein Ausschnitt einer Planetengetriebevorrichtung 10 im Bereich einer (bei vertikaler Ausrichtung des Triebstrangs untenliegenden) Gehäuseabdichtung 19 gezeigt. Wenigstens einer der Ausleitkanäle 18.2 führt auch zu einem Lager des Planetenträgers.

Aus Fig. 4 ist ersichtlich, dass auch der Eingriff (Verzahnung) der Eingangswelle mit den Planeten über innenliegende Düsen geschmiert werden kann; anders ausgedrückt: auch für diesen Bereich des Getriebes sind keine körperlichen Ölübergabestellen oder zusätzliche Zuleitungskanäle erforderlich. Über Entlüftungs- und Ablaufbohrungen im Planetenträger kann das durch Kontakt mit Lager und/oder Verzahnung und sonstigen rotierenden Getriebekomponenten aufgewärmte Ölmedium abfließen bzw. ausgetrieben werden, insbesondere auch fliehkraftgetrieben. Das Ölmedium kann insbesondere auch über Abläufe an einer unten liegenden Spaltdichtung aus dem Getriebegehäuse ausgeleitet und einer Ölversorgungseinheit (nicht dargestellt) zugeführt werden, wo es weiter heruntergekühlt werden kann.

### Bezugszeichenliste

- 10: Planetengetriebevorrichtung
- 10.1: Getriebegehäuse
- 10.2: Planetenhohlrad mit Innenverzahnung
- 10.3: Schmierbohrung bzw. Zuführkanal
- 10.5: unten liegende Spaltdichtung
- 11: Welle mit Sonne (Sonnenrad)
- 12: Planetenträger
- 13: Planet bzw. Planetenrad
- 13.1: Planetenachse bzw. Planetenachseinheit (z.B. Lagerbolzen)
- 13.3: Verdrehsicherung Planetenachse
- 13.5: Lager für Planetenrad
- 14: Düse, insbesondere Sprühdüse bzw. Zuführungsdüse
- 14.1: erste Düse
- 14.2: weitere (zweite) Düse
- 14.3: weitere (dritte) Düse
- 14.4: weitere (vierte) Düse
- 15: Ölmediumversorgung, insbesondere Versorgungsleitung/Druckleitung(-ssystem)
- 16: Staublecheinheit
- 18: Schmierbohrung bzw. Zuführ- oder Ausleitkanal
- 18.1: exzentrische/r Achsbohrung bzw. Zuführkanal, insbesondere axialparallel
- 18.11: Radialabschnitt Zuführkanal
- 18.2: Entlüftungsbohrung bzw. Auslasskanal
- 18.3: Ablaufbohrung bzw. Auslasskanal
- 19: Dichtung/Gehäuseabdichtung, insbesondere unten liegend im Ölbad
- 20: kontaktloser Sprühbereich
- F: Öl bzw. Ölmedium bzw. Getriebeöl (Fluid)
- M: Mittenlängsachse Getriebe bzw. Triebstrang
- P18: radial außenliegender Ausleitpunkt
- r: radiale Richtung (insbesondere horizontal)
- r20: radiale Erstreckung des kontaktlosen Sprühbereichs
- x: axiale Richtung bzw. axiale Ausrichtung des Getriebes oder Triebstrangs (z.B. vertikal)
- x20: axiale Erstreckung des kontaktlosen Sprühbereichs
- z: Höhenrichtung (vertikal), insbesondere auch axiale Ausrichtung des Triebstrangs
- zF: Höhenniveau vorgehaltenes Ölmedium

## Patentansprüche

1. Planetengetriebevorrichtung (10) insbesondere für Industriegetriebe, beispielsweise bei vertikaler Ausrichtung des Triebstrangs, wobei die Planetengetriebevorrichtung (10) aufweist: einen Planetenträger (12) mit daran gekoppelten Planetenrädern (13) sowie ein in einem Getriebegehäuse (10.1) abgestütztes Planetenhohlrad (10.2); wobei im/am Getriebegehäuse (10.1) wenigstens eine Düse (14) für die Zuführung von Ölmedium (F) vorgesehen ist, wobei in den Planetenrädern (13) jeweils wenigstens ein exzentrisch angeordneter und axial verlaufender Zuführkanal (18, 18.1) für Ölmedium (F) vorgesehen ist, insbesondere mit der wenigstens einen Düse (14) in ölkommunikativer Relation/Anordnung zum Zuführkanal oder zu einem entsprechenden Umlaufdurchmesser der Zuführkanäle.

2. Planetengetriebevorrichtung (10) nach Anspruch 1 **dadurch gekennzeichnet, dass** der jeweils wenigstens eine exzentrisch angeordnete und axial verlaufende Zuführkanal des jeweiligen Planetenrades zumindest bis zu einem mittigen axialen Bereich des Planetenrades, insbesondere bis zur halben axialen Länge des Verzahnungsabschnitts, vorgesehen ist und dort nach radial außen geführt oder angeschlossen ist, insbesondere ausschließlich nach radial außen; und/oder wobei der jeweilige exzentrisch angeordnete axiale Zuführkanal ausschließlich streng axial und/oder streng radial aufweisende Abschnitte aufweist; und/oder wobei der jeweilige exzentrisch angeordnete axiale Zuführkanal an einem Lager des jeweiligen Planetenrades mündet.

3. Planetengetriebevorrichtung (10) nach Anspruch 1 oder 2 **dadurch gekennzeichnet, dass** das jeweilige Planetenrad um eine Planetenachse gelagert ist, welche verdrehfest am Planetenträger gelagert ist, insbesondere mittels einer Verdrehsicherung, wobei der exzentrisch angeordnete axiale Zuführkanal in der jeweiligen Planetenachse vorgesehen ist; und/oder wobei die Planetenräder derart drehbar um eine/die jeweilige Planetenachse gelagert sind, dass die jeweilige Planetenachse in vordefinierter Umfangs-/Ausrichtposition ausgerichtet bleibt, insbesondere mit dem jeweiligen exzentrisch angeordneten und axial verlaufenden Zuführkanal in vordefinierter exzentrischer maximal radial außen liegender Radialposition bezüglich des Momentanpols (Mittelpunkt der Drehbewegung des Planetenträgers).

4. Planetengetriebevorrichtung (10) nach einem der Ansprüche 1 bis 3 **dadurch gekennzeichnet, dass** wenigstens eine Düse der Planetengetriebevorrichtung in einen Bereich stirnseitig der jeweiligen Planetenradachse oder stirnseitig zu einem Umlaufdurchmesser der Planetenradachsen geführt ist oder dorthin ausgerichtet ist; und/oder dass die Planetengetriebevorrichtung eine Mehrzahl von über den (Innen-)Umfang des Getriebegehäuses in radialer Richtung und/oder in Umfangsrichtung verteilt angeordneten Düsen zum Bereitstellen von Ölmedium aufweist.

5. Planetengetriebevorrichtung (10) nach einem der vorhergehenden Ansprüche **dadurch gekennzeichnet, dass** wenigstens eine (weitere) Düse in einen Bereich stirnseitig eines Lagers des Planetenträgers und/oder stirnseitig eines Lagers einer innerhalb des Planetenträgers geführten (Sonnen-)Welle geführt ist oder dorthin ausgerichtet ist; und/oder wobei der einlassseitig Planetenträger ohne Zuführkanäle ausgeführt ist.

6. Planetengetriebevorrichtung (10) nach einem der vorhergehenden Ansprüche **dadurch gekennzeichnet, dass** die Ölzuführung auf einem durch wenigstens einen Zuführkanal definierten Ölströmungspfad erfolgt, welcher zumindest auf der Druckseite nicht durch den Planetenträger verläuft oder welcher auf der Druckseite vor dem Planetenträger endet.

7. Planetengetriebevorrichtung (10) nach einem der vorhergehenden Ansprüche **dadurch gekennzeichnet, dass** stirnseitig der Planetenräder eine Staublecheinheit vorgesehen ist, insbesondere in radialer Überlappung des jeweiligen exzentrischen Zuführkanals, insbesondere in radial nach innen offener Anordnung, insbesondere in einer am Planetenträger befestigten Anordnung.

8. Planetengetriebevorrichtung (10) nach einem der vorhergehenden Ansprüche **dadurch gekennzeichnet, dass** eine/die in ölkommunikativer Relation zu den exzentrischen Zuführkanälen stehende Staublecheinheit der Planetengetriebevorrichtung ein bei bestimmungsgemäßem Betrieb gegen die Fliehkraft abgeschottetes Ölreservoir umgrenzt.

9. Planetengetriebevorrichtung (10) nach einem der vorhergehenden Ansprüche **dadurch gekennzeichnet, dass** die Planetengetriebevorrichtung wenigstens einen radial verlaufenden Auslasskanal zur Entlüftung aufweist, insbesondere in einer Anordnung auf axialer Höhe des jeweiligen Endes der Planetenradachsen.

10. Planetengetriebevorrichtung (10) nach einem der vorhergehenden Ansprüche **dadurch gekennzeichnet, dass** die Planetengetriebevorrichtung wenigstens einen radial verlaufenden Auslasskanal zum Ölablauf aufweist, insbesondere in einer Anordnung in ölkommunikativer Relation mit einem/dem radial verlaufenden Auslasskanal zur Entlüftung, insbesondere axial weiter außen liegend als der Entlüftungs-Auslasskanal.

11. Planetengetriebevorrichtung (10) nach einem der vorhergehenden Ansprüche **dadurch gekennzeichnet, dass** das Ölmedium in einem mit den Planetenrädern überlappenden Axialabschnitt mittels der Kanäle im Wesentlichen ausschließlich axial geführt ist und/oder in einem mit dem Planetenträger auslassseitig überlappenden Axialabschnitt mittels der Kanäle ausschließlich radial geführt ist.

12. Planetengetriebevorrichtung (10) nach einem der vorhergehenden Ansprüche **dadurch gekennzeichnet, dass** die Planetengetriebevorrichtung ausschließlich streng axial und/oder streng radial verlaufende Zuführkanäle oder Auslasskanäle jeweils für das Ölmedium aufweist; und/oder wobei ein/der vordefinierte Ölströmungspfad zumindest wie folgt definiert/vorgegeben ist: Auslass der Düse, Einlass zum jeweiligen exzentrisch angeordneten und axial verlaufender Zuführkanal bis hin zum/zu einem Lager des entsprechenden Planetenrades, Entlüftungs- und/oder Ablaufkanal insbesondere beginnend im Bereich des stirnseitigen Endes einer/der (Sonnen-)Welle, wobei der Entlüftungs- und/oder Ablaufkanal bevorzugt in ausschließlich radialer Ausrichtung vorgesehen ist.

13. Industriegetriebe (10), beispielsweise zum Antrieb einer Vertikalmühle, mit einer Planetengetriebevorrichtung (10) nach einem der vorhergehenden Ansprüche.

14. Verwendung einer Planetengetriebevorrichtung (10) insbesondere nach einem der Ansprüche 1 bis 12 in einem Industriegetriebe, insbesondere in vertikaler Einbaulage, wobei eine Ölmediumversorgung über wenigstens eine im/am Getriebegehäuse vorgesehene Düse für die Zuführung von Ölmedium bereitgestellt wird, welche Düse bevorzugt in ölkommunikativer Relation/Anordnung zu einer Stirnseite des Planetenträgers der Planetengetriebevorrichtung (oder wenigstens einer Planetengetriebestufe der Planetengetriebevorrichtung) angeordnet ist, und wobei das Ölmedium derart geführt ist/wird, dass das Ölmedium basierend auf der Relativbewegung der Getriebekomponenten, insbesondere auch schwerkraft- und/oder zentrifugalkraftgetrieben, über in Planetenachsen der Planetenräder der Planetengetriebevorrichtung jeweils vorgesehenen exzentrisch angeordneten und axial verlaufenden Zuführkanälen unabhängig vom Planetenträger zum jeweiligen Lager des jeweiligen Planetenrades geführt und von dort abgeleitet wird, insbesondere über ausschließlich axial oder radial verlaufende Kanalabschnitte.

15. Verfahren zum Bereitstellen von Ölmedium (F) in einer Planetengetriebevorrichtung (10) insbesondere nach einem der Ansprüche 1 bis 12, insbesondere in einem Industriegetriebe, wobei das Ölmedium (F) über wenigstens eine im/am Getriebegehäuse (10.1) der Planetengetriebevorrichtung (10) vorgesehene Düse (14) zugeführt und eingespeist wird, wobei das Ölmedium (F) zumindest in einem mit den Planetenrädern (13) der Planetengetriebevorrichtung (10) überlappenden Axialabschnitt derart mittels exzentrisch in Planetenachsen (13.1) der Planetenräder (13) angeordneten und axial darin verlaufenden Zuführkanälen (18.1) zu einem jeweiligen Lager (13.5) der Planetenräder geführt ist/wird, dass das Ölmedium (F) basierend auf der Relativbewegung der Getriebekomponenten zum jeweiligen Lager des jeweiligen Planetenrades geführt und von dort abgeleitet wird, insbesondere über im Wesentlichen ausschließlich axial verlaufende Kanalabschnitte (18.1) zu den Lagern des jeweiligen Planetenrades geführt über ausschließlich radial verlaufende Kanalabschnitte (18.2, 18.3) aus dem Planetenträger (12) abgeleitet wird.
